# DEMANDE DE BREVET EUROPEEN

(11) **EP 0 623 562 A1**
(43) Date de publication de la demande: **09.11.1994**
(21) Numéro de dépôt: 94400810.1
(22) Date de dépôt: 13.04.1994
(51) Int. Cl.: C03B 23/03, C03B 23/035, C03B 27/044

(54) **Installation modulable pour incurver et tremper une feuille de verre**

(30) Priorité: 05.05.1993 FR 9305359
(71) Demandeur: SELAS S.A., F-92632 Genneviliers Cédex (FR)
(72) Inventeur: Agius, Michel, F-95640 Marines (FR)
(74) Mandataire: Keib, Gérard

(57) **Abrégé**

L'installation pour incurver et tremper une feuille de verre (1) comprend une première série d'organes (3) de mise en forme présentant une surface (3a) destinée à venir en contact avec l'une des faces de la feuille de verre (1) et une deuxième série d'organes (4) comportant une portion de surface centrale (5) à laquelle est fixée au moins une partie mobile (6,7).

Des premiers moyens de réglage (10, 11, 12) permettent de modifier le profil de la surface (3a) de la première série d'organes (3), des moyens (18) commandent le déplacement de la partie mobile (6, 7) de la deuxième série d'organes (4) suivant une courbe parallèle au profil de la surface (3a) de la première série d'organes (3) et des seconds moyens de réglage sont adaptés à modifier le profil de la portion de surface centrale (5) de la deuxième série d'organes (4).

## Description

La présente invention concerne une installation modulable pour incurver et tremper une feuille de verre.

On connaît des installations de bombage du verre, telles que décrites dans la demande de brevet française 89 03760, dans lesquelles la feuille de verre est positionnée horizontalement entre deux organes de mise en forme qui sont appliqués respectivement sur chaque face de la feuille de verre. L'un des organes a un profil prédéterminé qui correspond à l'incurvation que l'on veut donner à la feuille de verre.

L'autre organe possède une partie centrale rigide dont le profil correspond au profil du premier organe situé en regard et deux parties mobiles fixées à la partie centrale et déplacées suivant une courbe parallèle au profil prédéterminé du premier organe.

Des jets de gaz sont envoyés sur la feuille de verre incurvée afin de tremper celle-ci.

De telles installations permettent de courber une feuille de verre suivant un profil prédéterminé tout en conservant une bonne qualité optique du verre.

De plus en plus, les feuilles de verre incurvées sont utilisées dans des applications variées (pare-brise de voiture, comptoir réfrigéré, cabine téléphonique...) et des profils divers sont recherchés.

Les installations connues nécessitent, pour modifier le profil de bombage des feuilles de verre, de changer l'intégralité ou une partie des organes de mise en forme, ce qui oblige à démonter ces organes et à créer autant de pièces substituables que de profils différents.

De telles installations ne permettent donc, en pratique, que la réalisation d'un nombre forcément limité de profils prédéterminés.

La présente invention a pour but de remédier aux inconvénients précités. Elle permet notamment de fournir une installation modulable qui permette de bomber une feuille de verre selon des profils les plus variés.

L'installation modulable pour incurver et tremper une feuille de verre visée par l'invention comprend des moyens pour positionner la feuille de verre chauffée horizontalement entre des organes de mise en forme de la feuille de verre, des moyens pour appliquer ces organes de part et d'autre de cette feuille et pour incurver celle-ci et des moyens pour envoyer des jets de gaz sur la feuille de verre pour tremper celle-ci. Les organes de mise en forme comporte une première série d'organes présentant une surface destinée à venir en contact avec l'une des faces de la feuille de verre et une deuxième série d'organes présentant une surface destinée à venir en contact avec l'autre face de la feuille de verre, comportant une portion de surface centrale à laquelle est fixée au moins une partie mobile.

Selon l'invention, l'installation est caractérisée en ce qu'elle comprend des premiers moyens de réglage pour modifier le profil de ladite surface présentée par la première série d'organes en fonction de l'incurvation que l'on veut donner à la feuille de verre, des moyens pour commander le déplacement de la partie mobile de la deuxième série d'organes suivant une courbe parallèle au profil de la surface de la première série d'organes et des seconds moyens de réglage adaptés à modifier le profil de ladite portion de surface centrale de la deuxième série d'organes en fonction du profil de la surface de ladite première série d'organes située en regard.

Ainsi, tout profil peut être réalisé par les organes de mise en forme et la feuille de verre peut être bombée avec des angles d'incurvation variés.

Il suffit, grâce aux moyens de réglage, de modifier le profil de la première série d'organes et de la portion de surface centrale de la deuxième série d'organes; lors du bombage, la feuille de verre est pressée entre ces deux surfaces et les parties mobiles de la deuxième série d'organes appliquent par enroulement la feuille de verre contre la surface de la première série d'organes.

Grâce aux parties mobiles, la feuille de verre est courbée sans glissement par rapport aux organes de mise en forme ce qui évite de marquer et de déformer la surface de la feuille de verre.

Selon une version avantageuse de l'invention, les organes de la première série sont constitués de blocs de section trapézoïdale, la base desdits blocs étant destinée à être appliquée sur la surface de la feuille de verre.

Ainsi, grâce à la forme en trapèze de ces blocs, on peut facilement, en resserrant plus ou moins les blocs adjacents l'un vers l'autre, modifier la courbure du profil des organes de mise en forme.

D'autres particularités et avantages de l'invention apparaîtront encore dans la description ci-après.

Aux dessins annexés, donnés à titre d'exemples non limitatifs:
- la figure 1 est une vue en élévation de l'installation selon l'invention;
- la figure 2 est une vue de dessous d'une série d'organes de mise en forme;
- les figures 3 et 4 sont des vues partielles en coupe transversale d'une série d'organes de mise en forme;
- la figure 5 est une vue en élévation de l'installation selon une seconde réalisation de l'invention; et
- la figure 6 est une vue de face d'une portion de surface de la deuxième série d'organes.

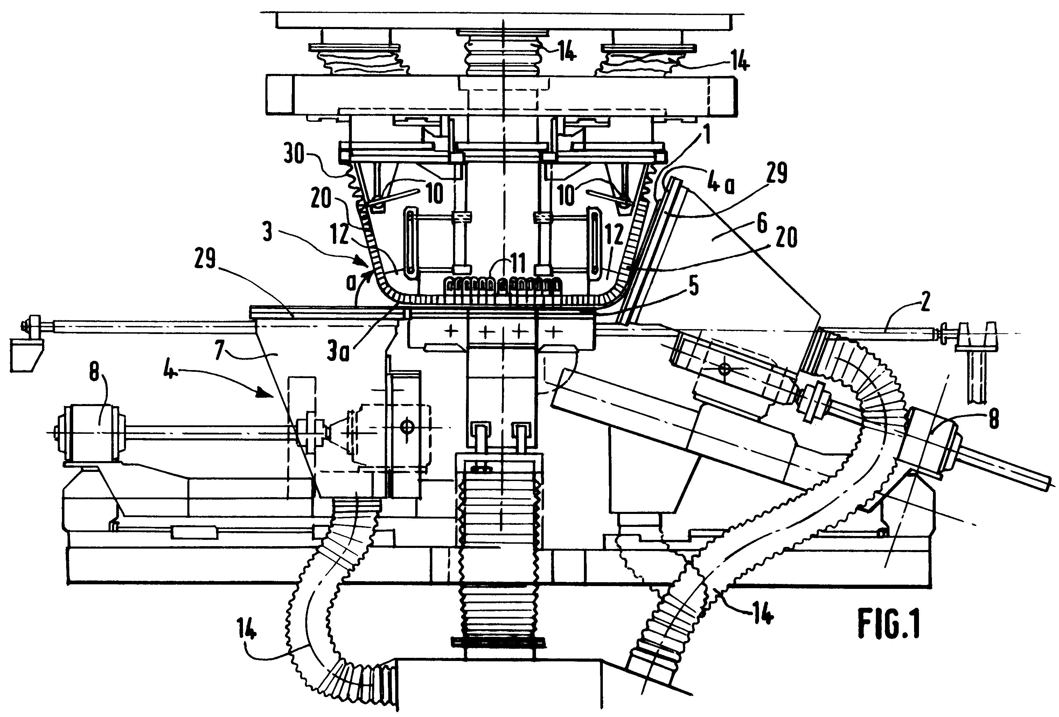

L'installation modulable pour incurver et tremper une feuille de verre selon l'invention est représentée à la figure 1 dans une première réalisation.

Cette installation comprend des moyens 2 pour positionner la feuille de verre chauffée 1 horizontalement entre deux organes de mise en forme 3, 4. Ces moyens 2 pour positionner la feuille de verre 1 sont de manière connue une série de rouleaux 2 parallèles entraînés en rotation qui servent à la fois de support à la feuille de verre 1 et de moyen de déplacement.

La feuille de verre 1 est ainsi conduite par ces rouleaux 2 dès sa sortie d'un four situé en amont jusqu'à l'installation.

Ces rouleaux 2 permettent également de sortir la feuille de verre 1, une fois courbée et trempée, de l'installation, de préférence du côté opposé à celui par lequel cette feuille a été introduite dans l'installation.

La feuille de verre 1 est chauffée généralement dans un four à une température avoisinant les 650°C. De préférence, le four est aménagé de manière à chauffer davantage les parties de la feuille de verre 1 qui seront fortement courbées par les organes de mise en forme 3, 4.

L'installation selon l'invention comprend des moyens pour appliquer les organes de mise en forme 3, 4 de part et d'autre de la feuille de verre 1.

Dans cet exemple de réalisation, une première série d'organes 3 est située au-dessus de la feuille de verre 1 et est immobile alors qu'une deuxième série d'organes 4, située en dessous de la feuille de verre 1, est déplaçable verticalement vers la première série d'organes 3 de manière à incurver la feuille de verre 1 entre les deux séries d'organes 3, 4.

L'installation comprend en outre des organes 14 pour envoyer des jets de gaz sur la feuille de verre 1 pour tremper celle-ci.

Ce gaz est envoyé sous une pression de 20 000-27 000 Pa grâce à des conduits 14 reliés aux organes de mise en forme 3, 4. Ces conduits 14 sont réalisés en matière souple et ont une longueur suffisante pour tolérer les déplacements des organes de mise en forme 3 et 4.

Conformément à l'invention, des premiers moyens de réglage 10, 11 et 12 permettent de modifier le profil de la surface 3a présentée par la première série d'organes 3 en fonction de l'incurvation que l'on veut donner à la feuille de verre 1.

Les premiers moyens de réglage comprennent au moins un dispositif d'extrémité 10 adapté à modifier l'angle a formé par une extrémité de la surface 3a de la première série d'organes 3 et un plan horizontal.

Comme représenté à la figure 1, l'installation comprend de chaque côté un tel dispositif d'extrémité 10 comprenant des vérins 10 adaptés à déplacer l'extrémité de la surface 3a de ladite première série d'organes 3 entre une première position dans laquelle elle se trouve sensiblement horizontale et une seconde position dans laquelle elle forme un angle a par rapport à un plan horizontal.

Cet angle a peut être compris entre 0 et 90°.

Les premiers moyens de réglage comprennent également au moins un dispositif d'incurvation 12 adapté à modifier le rayon de courbure d'une zone de bombage située entre une extrémité de la surface 3a de la première série d'organes 3 et une partie sensiblement horizontale de cette surface 3a.

Ce rayon de courbure est égal au minimum à 100 mm compte tenu de l'encombrement des organes 3 de mise en forme comme ceci sera expliqué ultérieurement.

Les moyens de réglage comprennent en outre un dispositif central 11 adapté à modifier la longueur de la partie horizontale de la surface 3a de la première série d'organes 3.

Comme représenté sur les figures 1 à 4, les organes de la première série 3 sont constitués de blocs 20 de section trapézoïdale, la base desdits blocs 20 étant destinée à être appliquée sur la surface de la feuille de verre 1.

Ces blocs 20 s'étendent parallèlement les uns aux autres et sont disposés perpendiculairement au profil transversal de la surface de la première série d'organes 3.

Ces blocs 20, en forme de trapèze, ont une hauteur de 25 mm.

De préférence, les blocs 20 situés au centre de la série d'organes 3 ont une base plus longue que les blocs 20 situés sur les côtés.

Ainsi, dans cet exemple de réalisation, le bloc 20a situé au centre de l'outil a une base de 40 mm, les côtés du trapèze formant un angle de 3° avec la verticale.

Les blocs 20b entourant ce bloc central 20a ont typiquement une base de 25 mm, l'angle formé par les côtés du trapèze et la verticale, étant égal à 3°.

Enfin, les blocs 20c situés vers les extrémités de la première série d'organes 3 ont une base de 17 mm et un angle formé par les côtés et la verticale, égal à 5°.

La courbure du profil présenté par la surface de la première série d'organes est donc réalisée en rapprochant plus ou moins les côtés des blocs 20 adjacents.

Lorsque les cotés des blocs 20 sont en contact les uns avec les autres, le rayon de courbure du profil présenté par la surface 3a est égal à 100 mm environ.

Les blocs 20 sont en bois et leur base est revêtue d'un tissu tissé souple 42. Ce tissu 42 en fils métalliques très fins permet de protéger le bois des blocs 20 de la chaleur dégagée par la feuille de verre et de former une surface de contact avec le verre suffisamment souple et lisse pour ne pas marquer la surface de la feuille de verre 1.

Des moyens élastiques 40 sont adaptés à relier au moins deux blocs 20 adjacents.

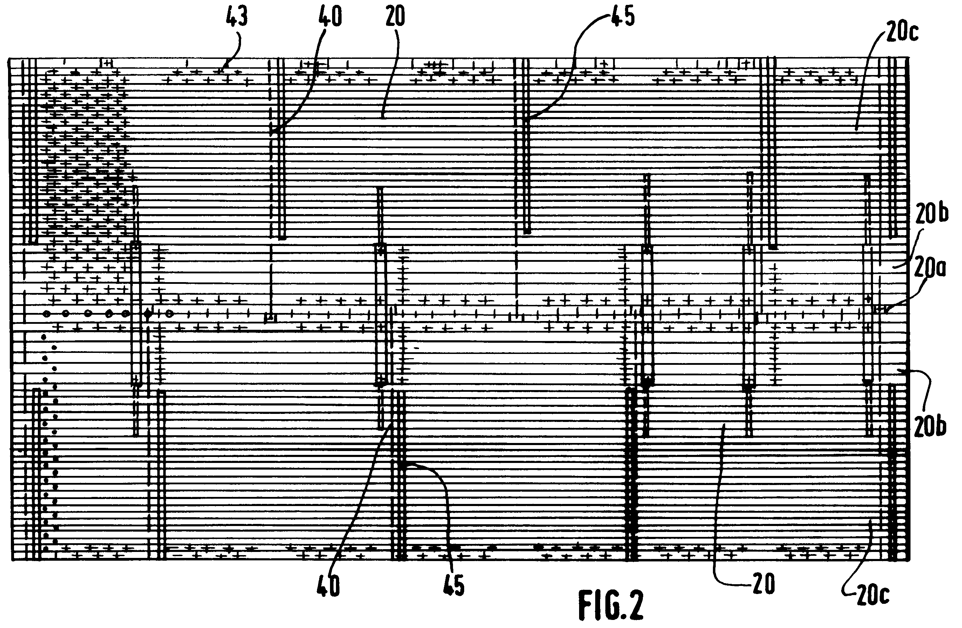

Comme représenté figure 2, un moyen élastique 40 est adapté à relier sensiblement la moitié des blocs 20 de la première série d'organes 3.

Ainsi, les blocs sont maintenus en contact grâce à cette force élastique.

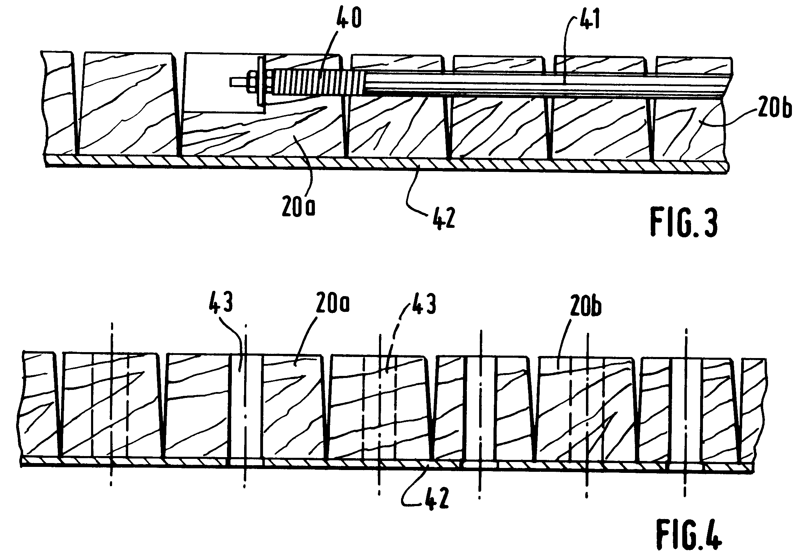

Comme illustré figure 3, les blocs 20 comportent une ouverture transversale 41 débouchant sur les faces latérales de chaque bloc 20, les ouvertures 41 adjacentes étant destinées à recevoir un ressort hélicoïdal 40.

De plus, afin de rigidifier les parties planes de la première série d'organes 3 de mise en forme, des moyens raidisseurs 45 sont adaptés à relier les blocs 20 formant une portion de surface plane.

De préférence, les blocs 20 comportent une ouverture transversale débouchant sur les faces latérales de chaque bloc, les ouvertures adjacentes étant alignées et destinées à recevoir une barre rigide 45.

Dans une autre réalisation de l'invention, la première série d'organes de mise en forme 3 comprend des moyens de réglage 11 et 12 différents.

Ainsi, le dispositif d'incurvation 12 comprend une série d'éléments 21 disposés en appui sur des blocs 20 de ladite première série d'organes 3 à l'opposé de la feuille de verre 1, chaque élément 21 étant solidaire d'une tige filetée 23.

Des écrous 22 sont vissés respectivement sur chaque tige filetée 23 et un mécanisme 12 est adapté à entraîner en rotation les vis filetées 23 et à disposer les éléments 21 le long d'une courbe en fonction de la courbure que l'on veut donner à la zone de bombage de la surface 30 de la première série d'organes 3.

Ainsi, en déplaçant plus ou moins les éléments 21, on modifie le rayon de courbure de la zone de bombage. Ces éléments 21 sont en appui sur les blocs 20 et imposent donc à la première série d'organes 3 de suivre leur courbure.

L'ensemble du mécanisme 12 d'incurvation peut être déplacé sur un axe vertical, schématisé par une flèche F, et sur un axe horizontal, schématisé par une flèche P, afin de pouvoir modifier la localisation de la zone de bombage le long du profil de la première série d'organes 3.

Une série de tiges filetées 34 est solidaire des blocs 20 formant une portion de surface centrale de la première série d'organes 3. Ces tiges filetées 34 sont adaptées à coulisser dans un écrou fixe 25 et à déplacer ainsi les blocs 20.

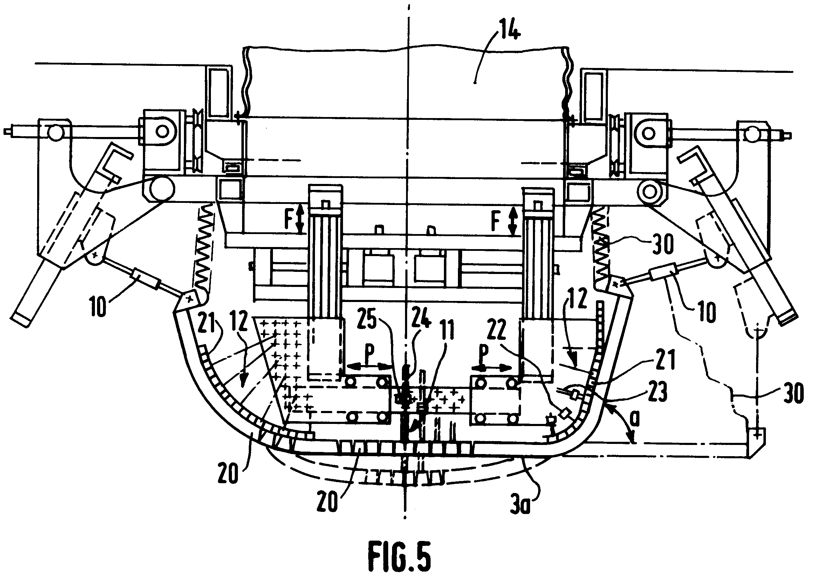

Comme représenté en pointillés à la figure 5, la portion de surface centrale peut être complètement courbe, seul le bloc central 20, situé au milieu de la première série d'organes 3, étant disposé horizontalement.

Un tel organe de mise en forme 3 permet donc d'obtenir une feuille de verre incurvée en forme d'arc de cercle ayant un rayon de courbure identique pour l'intégralité de la feuille de verre incurvée.

Comme représenté à la figure 1, la deuxième série d'organes de mise en forme 4 comporte une portion de surface centrale 5 à laquelle sont fixées deux parties mobiles 6 et 7.

Des moyens de déplacement 8 permettent de commander le déplacement des parties mobiles 6 et 7 de la deuxième série d'organes 4 suivant une courbe parallèle au profil de la surface 3a de la première série d'organes 3. Ces moyens de déplacement 8 permettent de déplacer les parties mobiles 6 et 7 dans les trois directions de l'espace de sorte que ces parties mobiles 6 et 7 peuvent décrire n'importe quelle courbe, quel que soit le profil de la première série d'organes de mise en forme 3.

Ce déplacement dans les trois directions des parties mobiles 6 et 7 est réalisé grâce à des vérins 8 qui peuvent déplacer les parties mobiles le long d'un axe, ces vérins 8 pouvant eux-mêmes pivoter autour d'un axe horizontal et se déplacer parallèlement à ce même axe.

Le déplacement des parties mobiles 6 et 7 est commandé par un ordinateur (non représenté) qui permet de définir le mouvement des vérins 8 en fonction d'un certain nombre de paramètres, tels que le rayon de courbure de la zone de bombage, l'angle a et la longueur de la portion de surface centrale de la première série d'organes 3.

Ainsi, à tout moment, la surface des parties mobiles 6 et 7 est en contact linéaire avec une des faces de la feuille de verre 1 et applique celle-ci contre la première série d'organes 3 sans qu'il n'y ait de glissement ou de frottement de la feuille de verre 1 contre les organes de mise en forme 3 et 4.

Ces parties mobiles 6 et 7 sont de préférence constituées d'un seul bloc 29 et présentent une surface plane en direction de la feuille de verre 1.

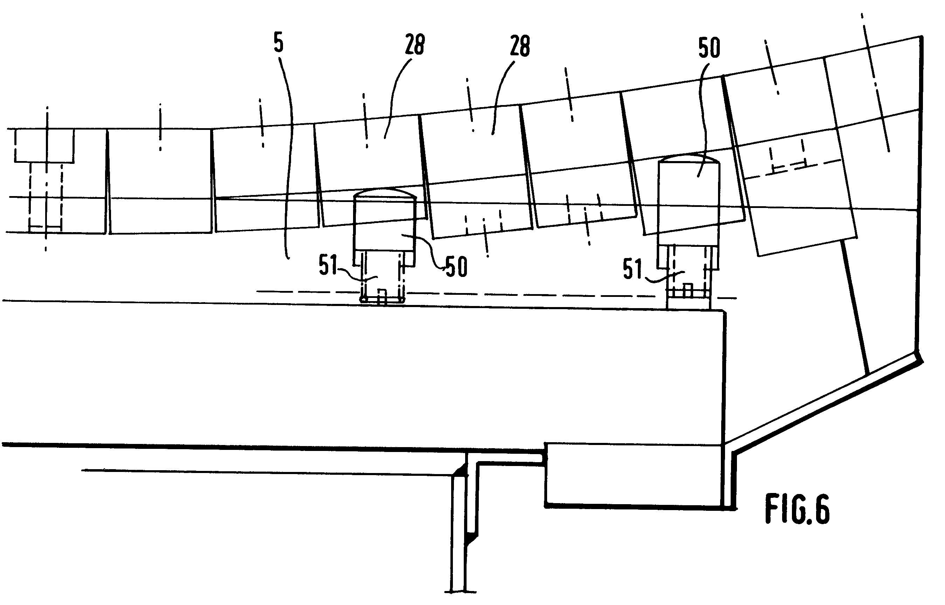

Comme illustré à la figure 6, des seconds moyens de réglage 50, 51 sont adaptés à modifier le profil de la portion de surface centrale 5 de la deuxième série d'organes 4 en fonction du profil de la surface 3a de la première série d'organes 3 située en regard.

La portion centrale 5 est constituée de préférence de blocs 28 qui ont une section sensiblement rectangulaire.

Ces blocs 28 ainsi que les blocs 29 sont interrompus au droit des rouleaux 2 adaptés à supporter la feuille de verre 1.

Ainsi, les organes 4 de la deuxième série peuvent passer entre les rouleaux 2 pour venir soulever la feuille de verre 1 et appliquer celle-ci contre la première série d'organes 3.

Les blocs 28 et 29 sont également en bois recouvert d'un tissu tissé souple en fils métalliques pour éviter de marquer la feuille de verre 1.

Les blocs 28 formant la portion de surface centrale 5 de la deuxième série d'organes 4 sont solidaires d'un écrou 50 vissé sur une tige filetée 51 et adapté à positionner les blocs 28 le long d'une courbe correspondant au profil de la surface 3a de la première série d'organes 3 située en regard.

Les blocs 20, 28 et 29 de la première 3 et seconde 4 série d'organes comportent chacun une série d'orifices 43 débouchant à la surface 3a, 4a des organes de mise en forme et connectés aux moyens 14 pour envoyer des jets de gaz sur la feuille de verre 1 pour tremper celle-ci.

Les orifices 43 de deux blocs adjacents 20 de la première série d'organes 3 sont disposés en quinconce comme représenté à la figure 2.

Ainsi, l'application du gaz sur la feuille de verre 1 est effectuée de manière uniforme sur toute la surface.

Comme illustré figures 1 et 5, les extrémités de la première série d'organes 3 sont reliées de manière étanche au support de l'installation par des soufflets extensibles 30 aptes à tolérer le déplacement des extrémités de la première série d'organes entre une position horizontale et une position sensiblement verticale.

Ainsi, le gaz est appliqué sous pression à la feuille de verre sans qu'il n'y ait de fuite.

La première série d'organes 3 est de préférence montée sur un support qui peut coulisser sur des rails de sorte que l'on peut régler le profil incurvé hors ligne, sans être gêné par le reste de l'installation.

Ainsi, en fonctionnement, on ajuste le profil d'incurvation de la première série d'organes 3 et on ajuste ensuite la portion de surface centrale 5 de la deuxième série d'organes pour qu'elle présente une surface complémentaire à celle de la première série d'organes 3 située en regard.

On rentre ensuite les paramètres de ce profil incurvé (angle a, rayon de courbure, longueur de la partie centrale horizontale) dans l'ordinateur qui commande les vérins 8 de déplacement des parties mobiles 6 et 7 de la deuxième série d'organes 4.

La feuille de verre 1 est chauffée dans un four, puis introduite dans l'installation conforme à l'invention.

Le mouvement des rouleaux 2 de support est arrêté et la deuxième série d'organes 4 est soulevée verticalement en direction de la première série d'organes 3.

La feuille de verre 1 est soulevée et appliquée contre la portion de surface centrale de la première série d'organes 3.

Les parties mobiles 6 et 7 sont alors déplacées par les vérins 8 de sorte que la feuille de verre 1 est appliquée sans glissement sur l'ensemble de la première série d'organes 3.

La deuxième série d'organes 4 est alors déplacée vers le bas et un gaz sous pression est soufflé sur la feuille de verre 1 pour tremper celle-ci.

La feuille de verre 1 est ensuite sortie de l'installation grâce aux rouleaux 2.

Bien entendu, l'invention n'est pas limitée aux exemples de réalisation décrits ci-dessus, et de nombreuses modifications peuvent être apportées sans sortir du cadre de l'invention.

Ainsi, le ressort hélicoïdal 40 de maintien élastique des blocs 20 de la première série d'organes 3 peut être remplacé par une lanière élastique.

Les parties mobiles 6 et 7 de la deuxième série d'organes peuvent présenter une surface incurvée dont la partie bombée est dirigée vers la feuille de verre.

## Revendications

1. Installation modulable pour incurver et tremper une feuille de verre (1) comprenant des moyens (2) pour positionner la feuille de verre chauffée (1) horizontalement entre des organes de mise en forme (3, 4) de ladite feuille de verre (1), des moyens pour appliquer ces organes (3, 4) de part et d'autre de cette feuille (1) et pour incurver celle-ci et des moyens (14) pour envoyer des jets de gaz sur la feuille de verre (1) pour tremper celle-ci, les organes (3, 4) de mise en forme comportant une première série d'organes (3) présentant une surface (3a) destinée à venir en contact avec l'une des faces de la feuille de verre (1) et une deuxième série d'organes (4) présentant une surface (4a) destinée à venir en contact avec l'autre face de la feuille de verre (1), comportant une portion de surface centrale (5) à laquelle est fixée au moins une partie mobile (6, 7), caractérisée en ce qu'elle comprend des premiers moyens de réglage (10, 11, 12) pour modifier le profil de ladite surface (3a) présentée par la première série d'organes (3) en fonction de l'incurvation que l'on veut donner à la feuille de verre (1), des moyens (8) pour commander le déplacement de la partie mobile (6, 7) de la deuxième série d'organes (4) suivant une courbe parallèle au profil de la surface (3a) de la première série d'organes (3) et des seconds moyens de réglage (50, 51) adaptés à modifier le profil de ladite portion de surface centrale (5) de la deuxième série d'organes (4) en fonction du profil de la surface (3a) de ladite première série d'organes (3) située en regard.

2. Installation conforme à la revendication 1, caractérisée en ce que lesdits premiers moyens de réglage comprennent au moins un dispositif d'extrémité (10) adapté à modifier l'angle (a) formé par une extrémité de la surface (3a) de la première série d'organes (3) et un plan horizontal.

3. Installation conforme à la revendication 2, caractérisée en ce que les dispositifs d'extrémité (10) comprennent des vérins adaptés à déplacer l'extrémité de la surface (3a) de ladite première série d'organes (3) entre une première position dans laquelle elle se trouve sensiblement horizontale et une seconde position dans laquelle elle forme un angle (a) par rapport à un plan horizontal.

4. Installation conforme à l'une des revendications 2 ou 3, caractérisée en ce que l'angle (a) est compris entre 0 et 90°.

5. Installation conforme à l'une des revendications 1 à 4, caractérisée en ce que lesdits premiers moyens de réglage comprennent au moins un dispositif d'incurvation (12) adapté à modifier le rayon de courbure d'une zone de bombage située entre une extrémité de la surface (3a) de la première série d'organes (3) et une partie sensiblement horizontale de cette surface (3a).

6. Installation conforme à l'une des revendications 1 à 5, caractérisée en ce que lesdits premiers moyens de réglage comprennent un dispositif central (11) adapté à modifier la longueur de la partie horizontale de la surface (3a) de la première série d'organes (3).

7. Installation conforme à l'une des revendications 1 à 6, caractérisée en ce que les organes de la première série (3) sont constitués de blocs (20) de section trapézoïdale, la base desdits blocs (20) étant destinée à être appliquée sur la surface de la feuille de verre (1).

8. Installation conforme à la revendication 7, caractérisée en ce qu'elle comprend une série d'éléments (21) disposés en appui sur des blocs (20) de ladite première série d'organes (3) à l'opposé de la feuille de verre (1), chaque élément (21) étant solidaire d'une tige filetée (23).

9. Installation conforme à la revendication 8, caractérisée en ce qu'elle comprend des écrous (22) vissés respectivement sur une tige filetée (23) et un mécanisme (12) adapté à entraîner en rotation les vis filetées (23) et à disposer les éléments (21) le long d'une courbe en fonction de la courbure que l'on veut donner à la zone de bombage de la surface (3a) de ladite première série d'organes (3).

10. Installation conforme à l'une des revendications 7 à 9, caractérisée en ce qu'elle comprend une série de tiges filetées (24) solidaires des blocs (20) formant une portion de surface centrale de la première série d'organes (3) et adaptées à coulisser dans un écrou fixe (25).

11. Installation conforme à l'une des revendications 1 à 10, caractérisée en ce que la seconde série d'organes (4) comprend des blocs (28, 29) interrompus au droit de rouleaux (2) adaptés à supporter la feuille de verre (1).

12. Installation conforme à l'une des revendications 7 à 11, caractérisée en ce que la surface desdits blocs (20, 28, 29) est revêtue d'un tissu tissé souple (42).

13. Installation conforme à l'une des revendications 7 à 12, caractérisée en ce que les blocs (20) de la première série d'organes s'étendent perpendiculairement au profil de la surface (3a) de ladite première série d'organes (3).

14. Installation conforme à l'une des revendications 7 à 13, caractérisée en ce que des moyens élastiques (40) sont adaptés à relier au moins deux blocs (20) adjacents de la première série d'organes (3).

15. Installation conforme à l'une des revendications 7 à 14, caractérisée en ce qu'un moyen élastique (40) est adapté à relier sensiblement la moitié des blocs (20) de la première série d'organes (3).

16. Installation conforme à l'une des revendications 7 à 15, caractérisée en ce que les blocs (20) de la première série d'organes (3) comportent au moins une ouverture transversale (41) débouchant sur les faces latérales de chaque bloc (20), les ouvertures (41) adjacentes étant destinées à recevoir un ressort hélicoïdal (40).

17. Installation conforme à l'une des revendications 7 à 16, caractérisée en ce qu'elle comprend des moyens raidisseurs (45) adaptés à relier les blocs (20) de la première série d'organes (3) formant une portion de surface plane.

18. Installation conforme à l'une des revendications 7 à 17, caractérisée en ce que les blocs (20) de la première série d'organes comportent au moins une ouverture transversale débouchant sur les faces latérales de chaque bloc, les ouvertures adjacentes étant alignées et destinées à recevoir une barre rigide (45).

19. Installation conforme à l'une des revendications 7 à 18, caractérisée en ce que les blocs (28) formant la portion de surface centrale (5) de la deuxième série d'organes (4) sont solidaires d'un écrou (50) vissé sur une tige filetée (51) et adapté à positionner lesdits blocs (28) le long d'une courbe correspondant au profil de la surface (3a) de ladite première série d'organes (3) située en regard.

20. Installation conforme à l'une des revendications 7 à 19, caractérisée en ce que les blocs (20, 28, 29) de la première (3) et seconde (4) série d'organes comportent chacun une série d'orifices (43) débouchant à la surface (3a, 4a) des séries d'organes (3, 4) et connectés aux moyens (14) pour envoyer des jets de gaz sur la feuille de verre (1) pour tremper celle-ci.

21. Installation conforme à la revendication 20, caractérisée en ce que les orifices (43) de deux blocs adjacents (20) de la première série d'organes (3) sont disposés en quinconce.
